# FASCICULE DE BREVET EUROPEEN

(11) **EP 2 658 472 B1**
(45) Date de publication et mention de la délivrance du brevet: **30.10.2019**
(21) Numéro de dépôt: 11807941.7
(22) Date de dépôt: 27.12.2011
(51) Int. Cl.: A61C 7/28

(54) **ENSEMBLE ATTACHE-CLIP-BASE AVEC BASE POUR APPAREILLAGE ORTHODONTIQUE ET APPAREIL ORTHODONTIQUE LE COMPORTANT**
BEFESTIGUNG/KLAMMER/BASISANORDNUNG MIT EINER BASIS FÜR EINE ORTHODONTISCHE VORRICHTUNG UND ORTHODONTISCHE VORRICHTUNG DAMIT
ATTACHMENT/CLIP/BASE ASSEMBLY INCLUDING A BASE, INTENDED FOR AN ORTHODONTIC APPLIANCE, AND ORTHODONTIC APPLIANCE COMPRISING SAME

(30) Priorité: 28.12.2010 FR 1061306
(43) Date de publication de la demande: 06.11.2013
(73) Titulaire: American Orthodontics Corporation, Sheboygan, WI 53081-1048 (US)
(72) Inventeur: CURIEL, Patrick, 92200 Neuilly sur Seine (FR); SALAH, Philippe, 75020 Paris (FR); AYACHE, William, 92200 Neuilly sur Seine (FR)
(74) Mandataire: Von Rohr Patentanwälte Partnerschaft mbB
(86) Numéro de dépôt international: PCT/EP2011/074068
(87) Numéro de publication internationale: WO 2012/089720

(56) Documents cités:
- WO-A1-2008/044912
- WO-A1-2010/028276
- US-A- 4 248 588
- US-A- 5 857 850
- US-A- 6 071 119
- US-A1- 2007 072 143

## Description

L'invention concerne un ensemble base/attache à utiliser dans un appareillage orthodontique individualisé pour le traitement d'un patient, destiné principalement, mais non exclusivement, à être utilisé dans le cas d'une technique linguale, c'est-à-dire avec l'appareil disposé sur la face postérieure non visible des dents.

Classiquement, de tels appareils comportent:
- au moins un arc orthodontique, autrement dit un fil métallique exerçant sur les dents un effort tendant à les amener, à partir de leur position initiale insatisfaisante, dite « mal position », à une position finale satisfaisante, dite « position corrigée » ;
- et une série d'attaches, dites aussi couramment « brackets », pourvues chacune d'au moins une gorge pour la réception d'un arc orthodontique.

Les attaches sont fixées individuellement sur les dents du patient, dans une position déterminée permettant à l'arc orthodontique de transférer sur les dents les efforts nécessaires pour qu'elles passent de la mal position à la position corrigée pendant le traitement. Cette fixation est réalisée par l'intermédiaire d'une « base », c'est à dire d'un élément intermédiaire dont une face épouse la surface de la dent sur laquelle l'attache doit être fixée, et dont l'autre face supporte l'attache.

Le plus couramment, un ou plusieurs arcs orthodontiques, et avec lui ou eux une seule série d'attaches comportant chacune une ou plusieurs gorges, sont utilisés.

Les techniques orthodontiques linguales, qui ont l'avantage esthétique de laisser l'appareillage pratiquement invisible depuis l'extérieur, ont commencé à se développer vers 1980. Dans leur cas, un élément important de la réussite du traitement est le bon positionnement de l'attache et de sa gorge sur la dent, puisque ce positionnement détermine l'orientation des efforts qui sont imposés à la dent correspondante, et donc les orientations de la dent dans les différentes directions de l'espace lorsqu'elle se trouvera en position finale corrigée. Ce positionnement est beaucoup plus délicat à réaliser en technique linguale qu'en technique dite labiale ou vestibulaire (où l'appareillage est disposé sur la face antérieure des dents), du fait de l'angulation importante des faces postérieures des dents. Cette angulation fait qu'une légère erreur de positionnement de l'attache peut placer la gorge dans une mauvaise position, incapable d'assurer la correction souhaitée de la position de la dent.

Les techniques informatiques ont pu apporter des perfectionnements importants dans la facilité de conception d'appareillages orthodontiques individualisés, spécifiques à chaque patient.

En particulier dans le document WO 03/068099 A2, on enseigne de concevoir de manière individualisée un ensemble formé d'une part par l'image virtuelle d'une base de fixation à la dent, conçue numériquement à partir d'une image informatique de l'arcade du patient avec les dents en mal position, et d'autre part une image virtuelle d'une attache pourvue d'une gorge pour l'insertion de l'arc orthodontique, cette image étant puisée dans une bibliothèque virtuelle d'attaches de formes prédéterminées. On réalise ensuite par prototypage rapide une attache formée d'un corps unique résultant de la combinaison de ces deux images. Puis on conçoit un arc orthodontique, conformé à l'aide d'un dispositif spécial, destiné à relier les attaches et à amener les dents du patient dans la position corrigée.

Après l'insertion de l'arc orthodontique dans la gorge de l'attache, cette gorge est obturée par le praticien de manière à y maintenir l'arc. Le plus classiquement, cette obturation est réalisée par insertion dans la gorge d'une ligature métallique ou élastomérique. Cependant, cette méthode a pour inconvénient de ne pas avoir une fiabilité optimale, du fait que la ligature peut ne pas être installée correctement par le praticien et peut voir ses propriétés s'altérer au fil du temps,notamment pour une ligature élastomérique. Si la ligature est déplacée ou détruite, le patient doit se déplacer au cabinet de l'orthodontiste pour la faire remplacer. Egalement, la réalisation soignée de chaque ligature prend beaucoup de temps, ce qui rend la mise en place de l'arc longue et inconfortable pour le patient. Enfin, si au cours du traitement il est nécessaire de changer l'arc, il faut que l'orthodontiste détruise de façon irréversible les ligatures pour enlever l'arc, ce qui là encore est long et inconfortable pour le patient. Et cette étape de destruction de la ligature conduit l'orthodontiste à exercer des efforts qui se transmettent à l'attache et peuvent fragiliser sa liaison avec la base.

Un progrès considérable a constitué en l'utilisation d'attaches dites « auto-ligaturantes ». Ces attaches sont adaptées pour recevoir un clip élastique (métallique) qui, après l'insertion de l'arc, est mis en place à une position qui obture la gorge et permet au clip d'empêcher la sortie de l'arc. Cette mise en place s'opère généralement par un glissement du clip selon la direction longitudinale de l'attache entre une position d'attente laissant la gorge ouverte pour l'insertion de l'arc et une position fonctionnelle fermée obturant la gorge, glissement qui peut être complété par un mouvement de rotation comme dans le document US 6,776,613 B2. Le déplacement du clip est réalisé manuellement par l'orthodontiste au moyen d'un de ses outils habituels et ne dure qu'une fraction de seconde. De même, le dégagement du clip préalable à un changement d'arc est réalisé par une simple traction exercée en sens inverse du glissement précédent, et est aussi très rapide. Enfin, les caractéristiques mécaniques et dimensionnelles du clip métallique sont stables dans le temps, et si l'attache et le clip ont été réalisés avec une bonne précision dimensionnelle, la fonctionnalité et la fiabilité de la ligature sont satisfaisantes.

Dans les attaches auto-ligaturantes connues, l'ouverture du clip par un mouvement de translation éventuellement complété par un mouvement de rotation nécessite toujours de ménager une zone fonctionnelle permettant les mouvements de fermeture et d'ouverture du clip. Classiquement cette zone est ménagée dans le corps même de l'attache, ce qui induit un certain nombre d'inconvénients:
- la zone fonctionnelle du mouvement impose que l'ensemble base/attache ait une épaisseur que l'on peut trouver trop importante pour procurer au patient un confort optimal ;
- la zone fonctionnelle n'est pas modulable selon des changements éventuels d'orientation de l'attache ce qui impose de fabriquer autant de types d'attaches que d'orientations possibles.

Le document WO 2010/028276 A1 décrit une attache auto-ligaturante comportant un clip pouvant être en forme de J. Le clip est mis en place par translation. La branche inférieure du clip progresse de manière guidée dans un espace ménagé dans la partie inférieure de l'attache. L'originalité de ce dispositif est de présenter un moyen de réglage de la hauteur de la branche supérieure du clip, mais n'a pas de rapport avec l'invention.

Le document US 5,857,850 A décrit une attache auto-ligaturante à clip essentiellement rotatif. La base sur laquelle l'attache serait ou pourrait être montée, ou même la partie inférieure de l'attache, ne peut pas contribuer au guidage du clip.

Le document US 2007/072143 A1 décrit une attache auto-ligaturante. La base sur laquelle l'attache serait posée ou à laquelle elle serait intégrée ne peut pas contribuer au guidage du clip.

Le document US 6,071,119 A décrit une attache auto-ligaturante à clip translatable destinée à être posée sur une base. Un canal est défini dans l'attache, dans lequel le clip peut progresser. La base puisse définir la limite inférieure du canal, mais comme on le voit sur les figures, compte tenu de l'élasticité du clip c'est uniquement la partie du canal délimitée par l'attache qui est censée guider le clip lors de ses déplacements.

Le document US 4,248,588 A décrit une attache auto-ligaturante à clip translatable qui est assez comparable à US 6,071,119 A.

Le document WO 2008/044912 A1 décrit une attache auto-ligaturante à clip rotatif destinée à être insérée sur une base pourvue d'un manchon dans lequel s'insère une branche déformable de l'attache, permettant d'ajuster les positions respectives de la base et de l'encoche de l'attache recevant l'arc. On évite ainsi de devoir désolidariser l'attache de la base pour insérer l'arc si la position de l'encoche ne s'y prête pas. La partie de l'attache portant l'encoche est solidaire d'une deuxième branche déformable pour que la position en hauteur de l'attache puisse être également réglée. Dans le cas où ce réglage en hauteur est effectivement réalisé, l'espace entre le manchon et l'attache va devenir trop large pour que le manchon puisse jouer un quelconque rôle de guidage. Ledit guidage devra alors être assuré par d'autres moyens. Dans ces conditions, lorsque la branche n'est pas courbée, le manchon n'est pas utile en tant que guide pour le clip.

Le but de l'invention est de proposer aux orthodontistes un dispositif de liaison entre une dent et un arc orthodontique comportant une attache auto-ligaturante et son clip associé, permettant de limiter ou supprimer les inconvénients ci-dessus.

A cet effet, l'invention a pour objet un ensemble tel que défini par la revendication 1.

Le déplacement du clip entre lesdites positions peut s'effectuer essentiellement selon un mouvement de rotation, sans glissement en translation du clip.

Le déplacement du clip entre lesdites positions peut s'effectuer essentiellement selon un mouvement de rotation, puis de glissement en translation du clip ou inversement.

Le déplacement du clip entre lesdites positions peut s'effectuer essentiellement selon un mouvement de glissement en translation du clip.

Le clip peut avoir la forme générale d'un U dont une première branche qui obture la gorge de l'attache est reçue dans un premier logement ménagé sur la face externe de l'attache, et dont l'extrémité d'une deuxième branche est reçue dans un logement ménagé sur la face occlusale de l'attache.

La base peut alors porter sur sa face externe une paroi délimitant, conjointement avec la face occlusale de l'attache, un logement dans lequel est reçue l'extrémité de la deuxième branche du clip.

Le clip peut comporter un moyen de préhension permettant au praticien de le déplacer entre lesdites positions.

Ledit moyen de préhension peut être un orifice ménagé sur ladite première branche du clip.

Ladite base peut présenter sur sa face externe un support sur lequel est placée ladite attache.

Ledit support peut comporter ladite paroi délimitant, conjointement avec la face occlusale de l'attache, un logement dans lequel est reçue l'extrémité de la deuxième branche du clip.

La base peut être fabriquée sur mesure, par exemple par prototypage rapide ou usinage.

La base peut être fabriquée de série.

L'ensemble peut être destiné à un appareil orthodontique du type lingual.

L'ensemble peut être destiné à un appareil orthodontique de type vestibulaire.

L'invention a pour objet un appareil orthodontique comportant un arc orthodontique et des ensembles comportant chacun une attache, un clip et une base, destinés à être montés chacun sur une dent d'un patient, caractérisé en ce que au moins un desdits ensembles est du type précédent.

Comme on l'aura compris, l'invention repose sur une nouvelle conception de l'ensemble formé par une attache auto-ligaturante, le clip qui obture sa gorge et la base qui supporte l'attache. Dans l'invention, le déplacement du clip n'est pas guidé seulement par l'attache, mais le chemin de déplacement du clip est aussi guidé et limité par la base.

Il est ainsi possible de conférer à l'attache une configuration plus compacte dans sa direction longitudinale puisque la fonction de guidage du clip remplie dans l'art antérieur uniquement par l'attache est ici remplie conjointement par l'attache et la base, ce qui permet de réduire significativement la taille de l'ensemble attache/base. Même si ce raccourcissement peut être relativement réduit, de quelques 1/10 de mm par exemple, il apporte néanmoins un supplément de confort très appréciable au patient, notamment si l'appareil auquel est destiné l'ensemble est du type lingual, comme dans l'exemple privilégié (mais non exclusif) d'application de l'invention.

L'invention permet également de placer l'attache dans des orientations différentes, sans avoir besoin d'en moduler la forme. C'est alors la base qui peut assurer l'adaptation de la forme et de la dimension de l'espace nécessaire aux mouvements d'ouverture et de fermeture du clip.

Il faut noter que l'utilisation d'une cinétique d'ouverture/fermeture du clip en pure rotation est le cas le plus favorable pour la mise en œuvre de l'invention, car l'orthodontiste dispose lors de la rotation d'un bras de levier suffisamment important pour détacher les couches de tartre qui ont pu se déposer sur l'attache et le clip. Les difficultés posées par ces couches de tartre sont régulièrement citées comme étant l'un des désavantages majeurs des attaches auto-ligaturantes les plus classiques dans lesquelles les mouvements du clip comportent une translation en plus ou à la place d'une rotation.

L'invention sera mieux comprise à la lecture de la description qui suit, donnée en référence aux figures annexées suivantes ;
- les figures 1 et 2 qui montrent en perspective avant et arrière un exemple d'attache destinée à un ensemble selon l'invention, lui-même destiné à un appareil orthodontique de type lingual ;
- la figure 3 qui montre en perspective le clip associé à cette attache ;
- la figure 4 qui montre le clip placé sur l'attache ;
- les figures 5 et 6 qui montrent en perspective avant et arrière la base sur laquelle l'attache doit être placée ;
- la figure 7 qui montre en perspective avant un exemple d'ensemble selon l'invention, qui est formé par l'attache, le clip et la base des figures précédentes avec le clip en position ouverte ;
- la figure 8 qui montre en perspective arrière l'ensemble formé par l'attache, le clip et la base des figures précédentes avec le clip en position fermée ;
- la figure 9 qui montre en section vu de profil l'ensemble formé par l'attache, le clip et la base des figures précédentes avec le clip en position ouverte ;
- la figure 10 qui montre en section vu de profil l'ensemble formé par l'attache, le clip et la base des figures précédentes avec le clip en position fermée.

Cette description sera donnée en prenant pour exemple un cas où l'appareil auquel est destiné l'ensemble attache-clip-base de l'invention est un appareil du type lingual. Mais la transposition de la description à un ensemble destiné à un appareil de type vestibulaire sera évidente pour le lecteur homme du métier.

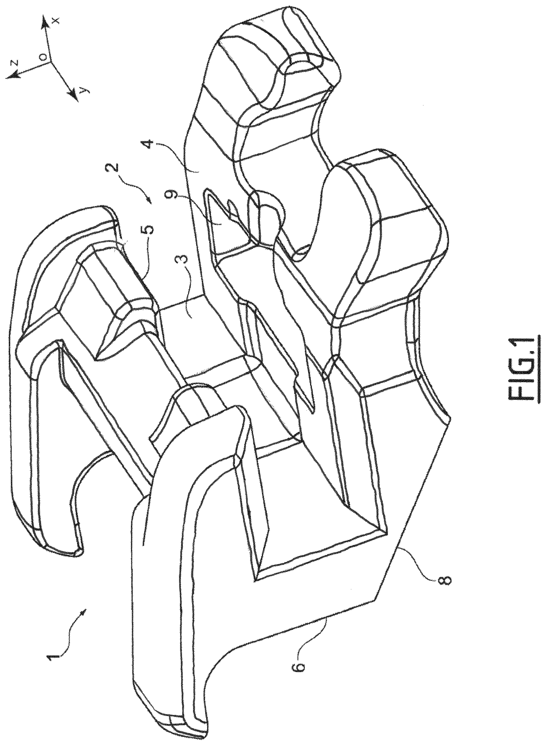

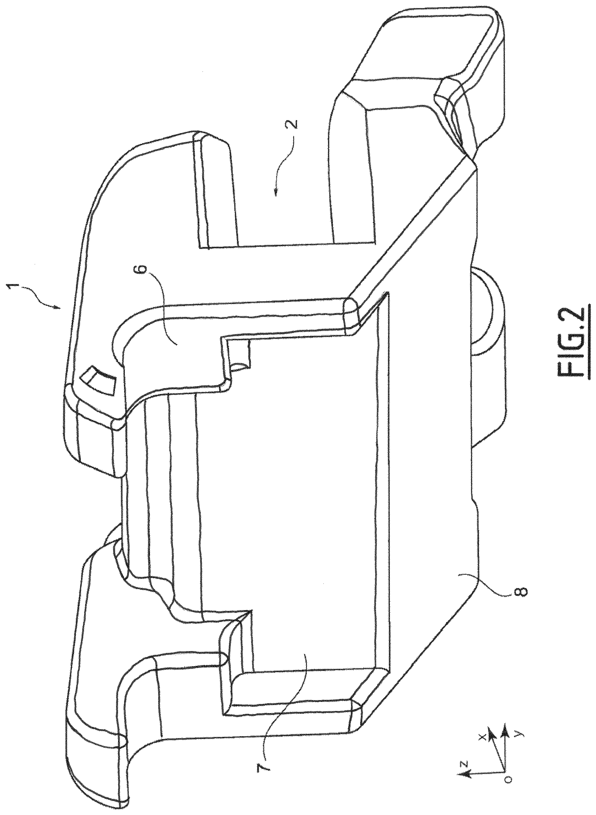

L'attache 1 montrée isolément sur les figures 1 et 2, et dont la configuration précise représentée n'est qu'un exemple non limitatif, comporte par référence au repère (O, X, Y, Z) montré sur ces mêmes figures :
- une gorge 2 à section sensiblement en forme de C ouverte dans la direction tournée vers la bouche du patient (direction linguale), donc disposée sur une face de l'attache qu'on appellera « face externe » destinée à recevoir un arc orthodontique, et délimitée par une paroi de fond 3 orientée sensiblement selon les axes OY, donc l'axe transversal de l'attache 1, et OZ, l'axe perpendiculaire à la direction longitudinale OX de l'attache 1, et par deux parois 4, 5 sensiblement perpendiculaires à la paroi de fond 3 et formant les deux branches du C. Ces parois 4, 5 sont orientées sensiblement selon les axes OX et OY ;
- une paroi arrière 6 située sur la face de l'attache destinée à être tournée en direction de la dent du patient sur laquelle l'attache sera montée, face qu'on appellera « face occlusale », opposée à la face linguale ; cette paroi arrière 6 porte un logement 7 de forme essentiellement rectangulaire dans l'exemple représenté, et dont la fonction sera vue plus loin ;
- une paroi de base 8 plane, qui est destinée à venir reposer sur la base qui portera l'attache 1.

La paroi 4 délimitant la gorge 2 et située la plus près de la paroi de base 8 porte un logement 9 orienté principalement selon l'axe transversal OY de l'attache 1, et dont la fonction sera explicitée plus loin.

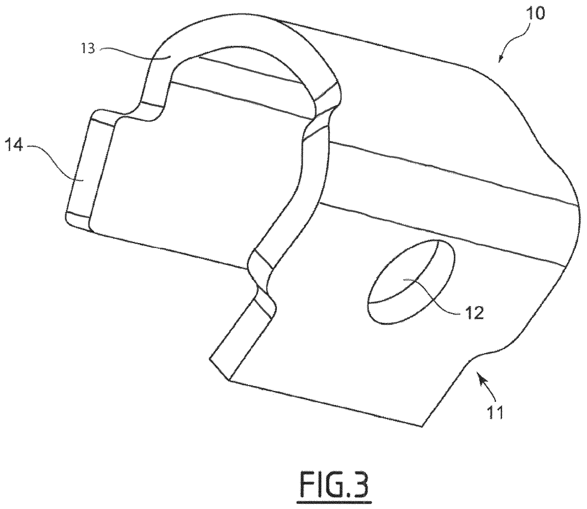

Le clip 10, montré isolément sur la figure 3, a des propriétés élastiques lui permettant de remplir les fonctions qui seront décrites par la suite. Il a sensiblement la forme d'un U dont les branches sont, au repos, légèrement resserrées dans l'exemple représenté.

Une première branche 11 est destinée à obturer la gorge 2 de l'attache 1 lorsque le clip 10 est en place. Elle porte de préférence des moyens de préhension permettant à l'orthodontiste de déplacer le clip 10 entre ses positions « ouverte » libérant la gorge 2 pour l'insertion de l'arc dans la gorge 2 ou l'extraction de l'arc hors de la gorge 2 et « fermée » dans laquelle l'arc est bloqué dans la gorge 2 par le clip 10. Dans l'exemple représenté, ces moyens de préhension sont un orifice 12 dans lequel l'orthodontiste peut introduire l'extrémité d'un outil formant levier. L'extrémité de la première branche 11 est destinée à venir s'insérer dans le logement 9 de la paroi 4 de l'attache 1 délimitant la gorge 2 et située la plus près de la paroi de base 8.

Une deuxième branche 13 porte à son extrémité une patte 14 destinée à venir s'insérer dans le logement 7 ménagé sur la paroi arrière 6 de l'attache 1. Cette patte 14 et le logement 7 ont des formes sensiblement complémentaires pour que le logement 7 assure le maintien de la patte 14 selon la direction transversale OY.

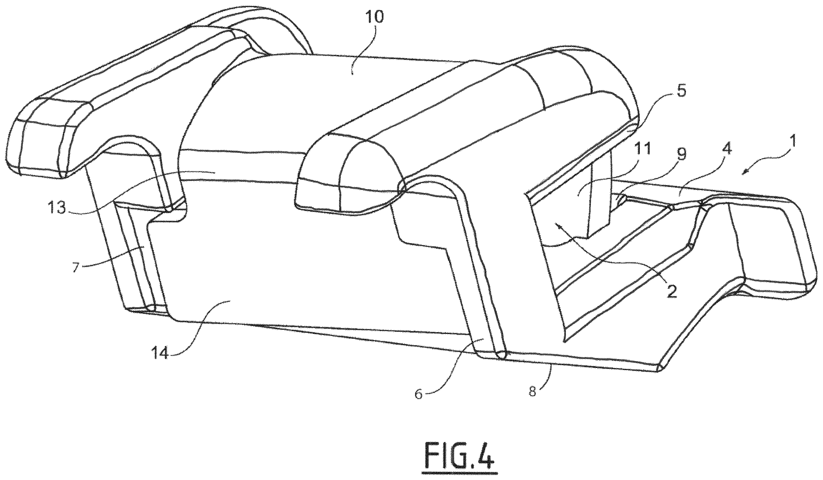

La figure 4 représente l'attache 1 avec le clip 10 monté sur elle. Les extrémités des branches 11, 13 du clip 10 sont insérées dans leurs logements 9, 7 respectifs, et le clip 10 chevauche la paroi 6 de l'attache 1 délimitant la gorge 2 la plus éloignée de la paroi de base 8.

L'attache 1 peut être fabriquée en tout matériau classiquement adapté à cet usage, tel qu'un matériau métallique biocompatible (acier inoxydable, titane, céramique notamment) et par tout procédé classique procurant l'excellente précision dimensionnelle nécessaire pour les attaches auto-ligaturantes. L'usinage ou la découpe laser sont particulièrement indiqués, davantage que le prototypage rapide.

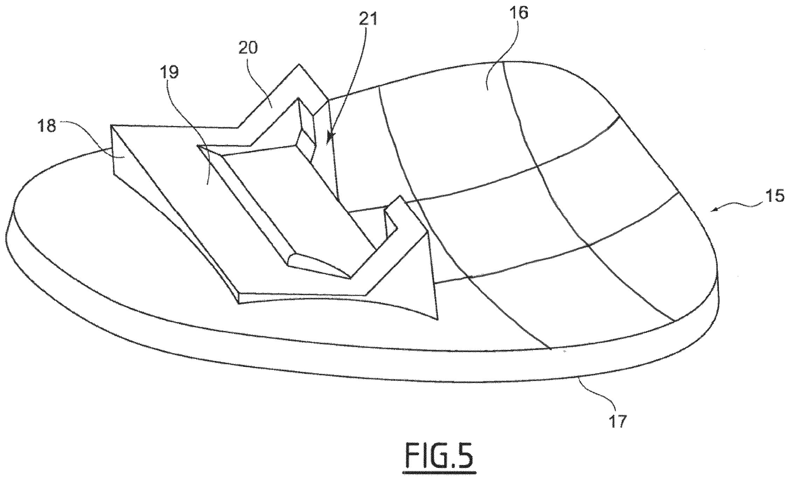

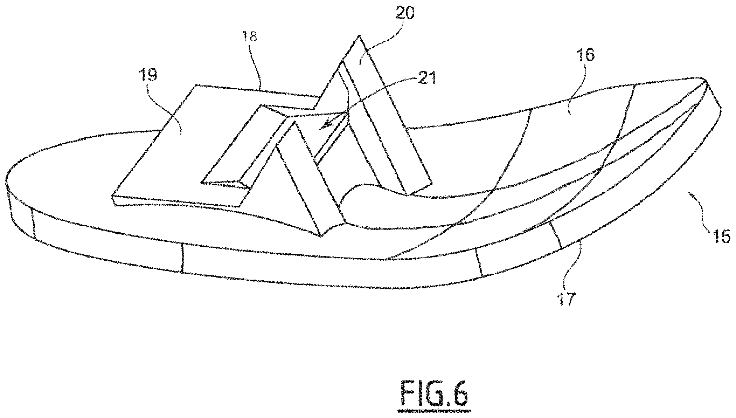

Les figures 5 et 6 montrent la base 15 sur la face externe (supérieure) 16 de laquelle l'attache 1 est destinée à être montée. La face occlusale (inférieure) 17 de la base 15 est destinée à être placée sur la dent correspondante du patient en lui étant classiquement fixée au moyen d'un matériau adhésif. Dans l'exemple représenté, la face supérieure 16 de la base 15 porte un support 18 pour l'attache 1. Ce support 18 comporte une partie plane 19 et une butée 20. La partie plane 19 peut éventuellement comporter un logement dans lequel l'attache 1 est destinée à être placée. Un tel logement favorise la précision du placement de l'attache 1, et contribue à la solidité de son maintien en place. Egalement il permet de diminuer l'épaisseur totale de l'ensemble pour une même configuration de l'attache 1, apportant ainsi un confort supplémentaire au patient.

Selon l'invention, le support 18 comporte également, sur la face de la butée 20 destinée à être tournée à l'opposé de l'attache 1, un logement 21 dans lequel la patte 14 du clip 10 est destinée à venir s'insérer lorsque le clip 10 est en position d'obturation de la gorge 2. Ce logement permet, en coopération avec le logement 7 de l'attache 1, de délimiter l'espace dans lequel la patte 14 de la deuxième branche 13 du clip 10 se meut lors du déplacement du clip 10 pendant une opération d'ouverture ou de fermeture de la gorge 2.

La base peut être fabriquée par tout procédé adapté à la précision requise et aux matériaux utilisés qui sont les matériaux classiques pour la fabrication des bases. Le prototypage rapide ou l'usinage en sont des exemples privilégiés mais non exclusifs.

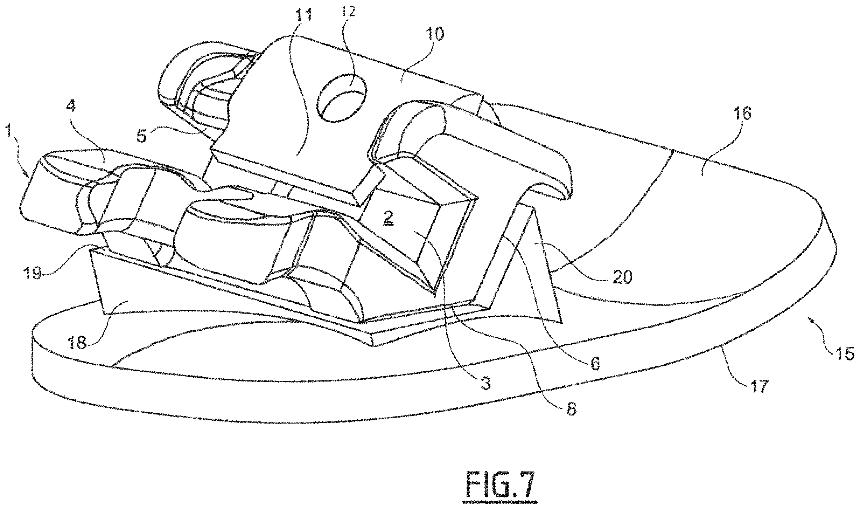

La figure 7 représente l'ensemble attache 1/clip 10/base 15 monté avec le clip 10 en position ouverte, permettant donc d'insérer l'arc orthodontique dans la gorge 2 de l'attache 1 ou de l'en extraire. Dans cette position, la patte 14 (non visible sur la figure 7) a son bord inférieur contre la paroi du logement 7 de la paroi arrière 6 de l'attache 1, le restant de la patte 14 étant écarté de la paroi 6 mais empêché de s'en éloigner par les parois du logement 21 de la butée 20 portée par la base 15.

Le clip 10 est ainsi guidé au cours de son déplacement en rotation lors de l'ouverture ou de la fermeture de la gorge 2.

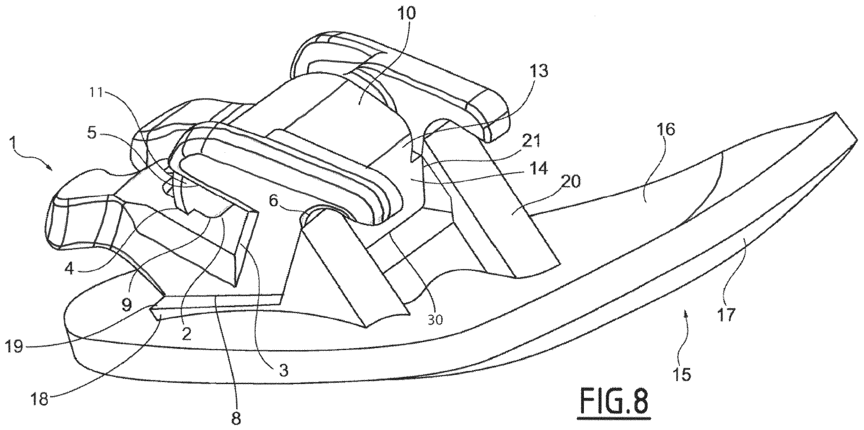

La figure 8 représente vue dans la direction opposée à celle de la figure 7 l'ensemble attache 1/clip 10/base 15 monté avec le clip 10 en position fermée, permettant donc de bloquer l'arc orthodontique dans la gorge 2 de l'attache 1. On voit que dans cette position, la patte 14 du clip 10 est plaquée contre la paroi arrière 6 de l'attache 1 et est donc contenue dans le logement 7. Quant à l'extrémité de la première branche 11 du clip 10, elle a été placée par l'orthodontiste, par un mouvement de rotation, dans le logement 9 correspondant de l'attache 1. ce mouvement de rotation est facile et très rapide à effectuer. En particulier, il n'est pas empêché par un éventuel dépôt de tartre sur l'ensemble, car le bras de levier procuré par la forme du clip 10 et sa rotation est suffisant pour détruire ou détacher ce dépôt, alors qu'un mouvement de translation serait susceptible d'être considérablement gêné par un dépôt de tartre sur la piste du clip.

L'élasticité du clip 10 est suffisante pour maintenir l'extrémité de la première branche 11 et la patte 14 de la deuxième branche 13 dans leurs logements respectifs 9, 7. les efforts exercés par l'arc orthodontique sur le clip 10 ne peuvent s'exercer que dans la direction de sortie de l'arc de la gorge 2 (axe OX) puisqu'ils sont canalisés par les parois 4, 5 de la gorge 2 et ne tendent donc pas à faire sortir le clip 10 de ses logements 7, 9.

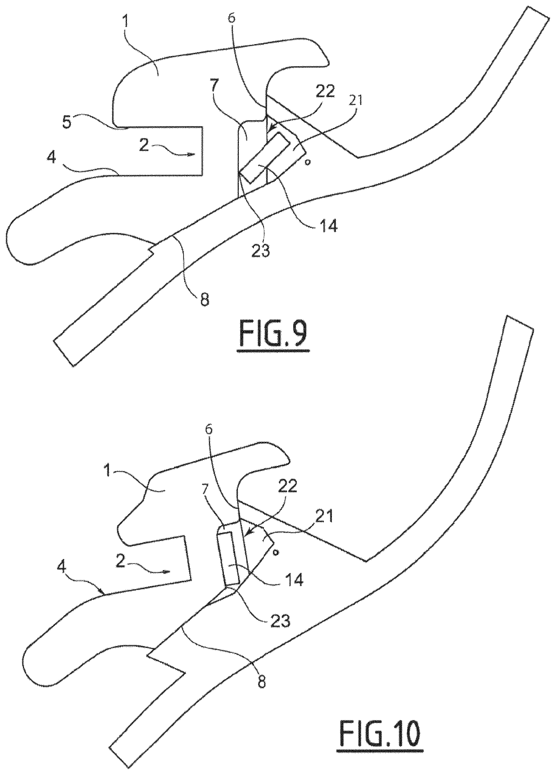

Les figures 9 et 10 représentent en section de profil l'ensemble selon l'invention représenté sur les figures précédentes. Sur la figure 9 le clip 10 est en position ouverte, et sur la figure 10 le clip 10 est en position fermée. Le plan de section passe à proximité d'un bord latéral de l'attache 1 et, par conséquent, de toutes les portions du clip 10, seule la patte 14 est visible sur ces sections. Mais ces sections permettent de bien voir comment la patte 14 est renfermée dans le logement 22 formé par la réunion des logements 7 ménagé sur l'attache 1 et 21 ménagé sur le support 20. Les dimensions du logement 22 sont calculées pour que la patte 14 puisse se mouvoir selon un mouvement qui est très sensiblement une rotation, son arête inférieure 23 pouvant prendre appui sur la paroi du logement 7 ménagé sur l'attache 1, en étant empêché de s'écarter de sa trajectoire de rotation par la paroi du logement 21 ménagé sur le support 20. Cette rotation s'effectue donc de façon complètement guidée lorsque l'orthodontiste la commande, sans qu'il soit nécessaire de matérialiser un axe qui traverserait l'attache 1 et le clip 10. Cela permet de conserver aux pièces de l'ensemble une conception non exagérément complexe et compatible avec le degré de miniaturisation des pièces.

L'exemple précis qui a été décrit n'est pas limitatif. En particulier, la base peut être conçue pour contribuer au guidage du clip selon une autre direction qu'une rotation pure : une rotation complétée par un glissement en translation ou l'inverse, ou un pur glissement en translation.

Dans le cas le plus favorable, la base est conçue sur mesure et fabriquée par des méthodes telles que le prototypage rapide ou l'usinage. En variante, il peut être acceptable de réaliser la base en série.

## Revendications

1. Ensemble formé par:
- une attache auto-ligaturante (1) destinée à faire partie d'un appareil orthodontique, ladite attache (1) présentant selon sa direction longitudinale (OX) une face externe et une face occlusale et étant pourvue sur sa face externe d'une gorge (2) pour la réception d'un arc orthodontique;
- un clip élastique (10) déplaçable par rapport à l'attache (1) de manière réversible entre une position ouverte laissant un passage libre pour l'insertion de l'arc dans la gorge (2) ou l'extraction de l'arc hors de la gorge (2) et une position fermée obturant la gorge (2);
- et une base (15) présentant une face externe (16) et une face occlusale (17), ladite face externe (16) de la base (15) supportant ladite attache (1) et ladite face occlusale (17) étant destinée à reposer sur une dent du patient en épousant la surface de ladite dent, ladite base (15) comportant sur sa face externe (16) un support (18) pour l'attache (1);
**caractérisé en ce que**
ladite attache (1) comprend un logement (7) ménagé sur la face occlusale de l'attache (1),
ledit support (18) comprend une butée (20) et un logement (21) défini dans la butée (20),
le clip élastique (10) comprend une première branche (11) destinée à obturer la gorge (2) lorsque le clip élastique (10) est en place et une deuxième branche (13) comprenant une patte (14) au niveau d'une extrémité,
la patte (14) du clip élastique (10) est retenue de manière mobile dans un logement (22) formé par la réunion du logement (7) ménagé sur la face occlusale de l'attache (1) et du logement (21) défini dans la butée (20), où cette réunion fournit des moyens de guidage du clip élastique (10) lors des déplacements dudit clip élastique (10) entre sa position ouverte et sa position fermée, de sorte que ladite patte (14) soit renfermée dans le logement (22) formé par la réunion du logement (7) ménagé sur la face occlusale de l'attache (1) et du logement (21) défini dans la butée (20).

2. Ensemble selon la revendication 1, **caractérisé en ce que** lesdits moyens de guidage font que le déplacement du clip élastique (10) entre lesdites positions s'effectue essentiellement selon un mouvement de rotation, sans glissement en translation du clip élastique (10).

3. Ensemble selon la revendication 1, **caractérisé en ce que** lesdits moyens de guidage font que le déplacement du clip élastique (10) entre lesdites positions s'effectue essentiellement selon un mouvement de rotation, puis de glissement en translation du clip élastique (10) ou inversement.

4. Ensemble selon la revendication 1, **caractérisé en ce que** lesdits moyens de guidage font que le déplacement du clip élastique (10) entre lesdites positions s'effectue essentiellement selon un mouvement de glissement en translation du clip élastique (10).

5. Ensemble selon l'une des revendications 1 à 4, **caractérisé en ce que** le clip élastique (10) a la forme générale d'un U dont la première branche (11) est reçue dans un premier logement (9) ménagé dans une paroi (4) sur la face externe de l'attache (1), la paroi (4) délimitant la gorge (2).

6. Ensemble selon la revendication 5, **caractérisé en ce que** la base (15) entre en prise avec une paroi arrière (6) de l'attache (1) dans laquelle le logement (7) ménagé sur la face occlusale de l'attache (1) est défini.

7. Ensemble selon l'une des revendications 1 à 6, **caractérisé en ce que** le clip élastique (10) comporte un moyen de préhension permettant au praticien de le déplacer entre lesdites positions.

8. Ensemble selon la revendication 7, **caractérisé en ce que** ledit moyen de préhension est un orifice (12) ménagé sur ladite première branche (11) du clip élastique (10).

9. Ensemble selon l'une des revendications 1 à 8, **caractérisé en ce que** le support (18) comprend une partie plane (19) sur laquelle est placée ladite attache (1).

10. Ensemble selon l'une des revendications 1 à 9, **caractérisé en ce que** la base (15) est fabriquée sur mesure, par exemple par prototypage rapide ou usinage.

11. Ensemble selon l'une des revendications 1 à 9, **caractérisé en ce que** la base (15) est fabriquée de série.

12. Appareil orthodontique comportant un arc orthodontique et des ensembles comportant chacun une attache (1), un clip élastique (10) et une base (15), destinés à être montés chacun sur une dent d'un patient, **caractérisé en ce qu'**au moins un desdits ensembles est du type selon l'une des revendications 1 à 11.

## Patentansprüche

1. Anordnung, ausgebildet durch:
eine selbstligierende Befestigung (1), die dazu bestimmt ist, Teil einer orthodontischen Vorrichtung zu sein, wobei die Befestigung (1) in ihrer Längsrichtung (OX) eine Außenseite und eine Okklusalseite aufweist und an ihrer Außenseite mit einer Ausnehmung (2) zur Aufnahme eines orthodontischen Bogens versehen ist;
einen elastischen Clip (10), der in Bezug auf die Befestigung (1) in reversibler Weise zwischen einer offenen Position, die einen Freiraum für das Einsetzen des Bogens in die Ausnehmung (2) oder das Herausnehmen des Bogens aus der Ausnehmung (2) lässt, und einer geschlossenen Position, die die Ausnehmung (2) verschließt, verschiebbar ist;
und eine Basis (15), die eine Außenseite (16) und eine Okklusalseite (17) aufweist, wobei die Außenseite (16) der Basis (15) die Befestigung (1) trägt und die Okklusalseite (17) dazu vorgesehen ist, auf einem Zahn des Patienten aufzuliegen und an der Oberfläche des Zahns anzuliegen, wobei die Basis (15) an ihrer Außenseite (16) einen Träger (18) für die Befestigung (1) aufweist;
**dadurch gekennzeichnet, dass**
die Befestigung (1) eine Aufnahme (7) umfasst, die auf der Okklusalseite der Befestigung (1) angeordnet ist,
der Träger (18) einen Anschlag (20) und eine in dem Anschlag (20) definierte Aufnahme (21) umfasst,
der elastische Clip (10) einen ersten Zweig (11) umfasst, der dazu vorgesehen ist, die Ausnehmung (2) zu verschließen, wenn der elastische Clip (10) in Position ist, und einen zweiten Zweig (13), der eine Lasche (14) im Bereich eines Endes umfasst,
wobei die Lasche (14) des elastischen Clips (10) in beweglicher Weise in einer Aufnahme (22) gehalten wird, die durch die Vereinigung der auf der Okklusalseite der Befestigung (1) angeordneten Aufnahme (7) und der im Anschlag (20) definierten Aufnahme (21) ausgebildet ist, wobei diese Vereinigung Mittel zur Führung des elastischen Clips (10) bei Verschiebungen des elastischen Clips (10) zwischen seiner offenen Position und seiner geschlossenen Position bereitstellt, sodass die Lasche (14) in der Aufnahme (22) eingeschlossen ist, die durch die Vereinigung der auf der Okklusalseite der Befestigung (1) angeordneten Aufnahme (7) und der im Anschlag (20) definierten Aufnahme (21) ausgebildet ist.

2. Anordnung nach Anspruch 1, **dadurch gekennzeichnet, dass** die Führungsmittel bewirken, dass die Verschiebung des elastischen Clips (10) zwischen den Positionen im Wesentlichen in einer Drehbewegung ohne translatorische Verschiebung des elastischen Clips (10) erfolgt.

3. Anordnung nach Anspruch 1, **dadurch gekennzeichnet, dass** die Führungsmittel bewirken, dass die Verschiebung des elastischen Clips (10) zwischen den Positionen im Wesentlichen in einer Drehbewegung und einer anschließenden translatorischen Verschiebungsbewegung des elastischen Clips (10) oder umgekehrt erfolgt.

4. Anordnung nach Anspruch 1, **dadurch gekennzeichnet, dass** die Führungsmittel bewirken, dass die Verschiebung des elastischen Clips (10) zwischen den Positionen im Wesentlichen in einer translatorischen Verschiebungsbewegung des elastischen Clips (10) erfolgt.

5. Anordnung nach einem der Ansprüche 1 bis 4, **dadurch gekennzeichnet, dass** der elastische Clip (10) die allgemeine Form eines U aufweist, dessen erster Zweig (11) in einer ersten Aufnahme (9) aufgenommen ist, die in einer Wand (4) auf der Außenseite der Befestigung (1) angeordnet ist, wobei die Wand (4) die Ausnehmung (2) begrenzt.

6. Anordnung nach Anspruch 5, **dadurch gekennzeichnet, dass** die Basis (15) mit einer Rückwand (6) der Befestigung (1) in Eingriff kommt, in der die auf der Okklusalseite der Befestigung (1) angeordnete Aufnahme (7) definiert ist.

7. Anordnung nach einem der Ansprüche 1 bis 6, **dadurch gekennzeichnet, dass** der elastische Clip (10) eine Greifeinrichtung aufweist, die es dem Arzt ermöglicht, ihn zwischen den Positionen zu bewegen.

8. Anordnung nach Anspruch 7, **dadurch gekennzeichnet, dass** die Greifeinrichtung eine Öffnung (12) ist, die am ersten Zweig (11) des elastischen Clips (10) angeordnet ist.

9. Anordnung nach einem der Ansprüche 1 bis 8, **dadurch gekennzeichnet, dass** der Träger (18) einen ebenen Teil (19) umfasst, an dem die Befestigung (1) angeordnet ist.

10. Anordnung nach einem der Ansprüche 1 bis 9, **dadurch gekennzeichnet, dass** die Basis (15) auf Maß gefertigt wird, beispielsweise durch schnelle Prototypenerstellung oder Fräsen.

11. Anordnung nach einem der Ansprüche 1 bis 9, **dadurch gekennzeichnet, dass** die Basis (15) seriell gefertigt wird.

12. Orthodontische Vorrichtung, umfassend einen orthodontischen Bogen und Anordnungen, die jede eine Befestigung (1), einen elastischen Clip (10) und eine Basis (15) aufweisen und dazu bestimmt sind, jede an einem Zahn eines Patienten befestigt zu werden, **dadurch gekennzeichnet, dass** zumindest eine dieser Anordnungen von der Art nach einem der Ansprüche 1 bis 11 ist.

## Claims

1. An assembly formed by:
a self-ligating bracket (1) intended to be part of an orthodontic apparatus, said bracket (1) having in its longitudinal direction (OX) an outer face and an occlusal face and being provided on its outer face with a groove (2) for holding an orthodontic arch wire,
an elastic clip (10) that can be moved relative to the bracket (1) reversibly between an open position, leaving a free passage for the insertion of the arch wire into the groove (2) or the extraction of the arch wire from the groove (2), and a closed position closing off the groove (2), and
a base (15) having an outer face (16) and an occlusal face (17), said outer face (16) of the base (15) supporting said bracket (1) and said occlusal face (17) being intended to rest on a patient's tooth by conforming to the surface of said tooth, said base (15) having on its outer face (16) a support (18) for the bracket (1),
**characterized in that**
said bracket (1) comprises a housing (7) formed on the occlusal face of the bracket (1),
said support (18) comprises an abutment (20) and a housing (21) defined in the abutment (20),
the elastic clip (10) comprises a first branch (11) for closing off the groove (2) when the elastic clip (10) is in place and a second branch (13) that comprises a tab (14) at one end,
the tab (14) of the elastic clip (10) is movably retained within a housing (22) formed by the combination of the housing (7) formed on the occlusal face of the bracket (1) and the housing (21) defined in the abutment (20), wherein this combination provides guiding means for guiding the elastic clip (10) when moving said elastic clip (10) between its open position and its closed position, such that the tab (14) is contained in the housing (22) formed by the combination of the housing (7) formed on the occlusal face of the bracket (1) and the housing (21) defined in the abutment (20).

2. The assembly as claimed in claim 1, **characterized in that**
the elastic clip (10) is movable between said positions guided by said guiding means substantially by a rotational movement, without translational sliding of the elastic clip (10).

3. The assembly as claimed in claim 1, **characterized in that**
the elastic clip (10) is movable between said positions guided by said guiding means substantially by a rotational movement and a following translational sliding of the elastic clip (10) or vice versa.

4. The assembly as claimed in claim 1, **characterized in that**
the elastic clip (10) is movable between said positions guided by said guiding means substantially by a translational sliding movement of the elastic clip (10).

5. The assembly as claimed in any one of claims 1 to 4, **characterized in that** the elastic clip (10) is generally U-shaped, with the first branch (11) being held in a housing (9) formed in a wall (4) on the outer face of the bracket (1), the wall (4) delimiting the groove (2).

6. The assembly as claimed in claim 5, **characterized in that**
the base (15) engages a rear wall (6) of the bracket (1) in which the housing (7) formed on the occlusal face of the bracket (1) is defined.

7. The assembly as claimed in any one of claims 1 to 6, **characterized in that** the elastic clip (10) has a grasping means enabling the practitioner to move it between said positions.

8. The assembly as claimed in claim 7, **characterized in that**
said grasping means is an orifice (12) formed in the first branch (11) of the elastic clip (10).

9. The assembly as claimed in any one of claims 1 to 8, **characterized in that** said support (18) comprises a planar part (19) on which the bracket (1) is placed.

10. The assembly as claimed in any one of claims 1 to 9, **characterized in that** the base (15) is made to measure, for example by rapid prototyping or machining.

11. The assembly as claimed in any one of claims 1 to 9, **characterized in that** the base (15) is mass produced.

12. An orthodontic apparatus comprising an orthodontic arch wire and assemblies which each comprise a bracket (1), an elastic clip (10), and a base (15) that are each designed to be fitted to a patient's tooth, **characterized in that**
at least one of said assemblies is of the type as claimed in any one of claims 1 to 11.
